# EUROPÄISCHE PATENTANMELDUNG

(11) **EP 3 508 669 A1**
(43) Veröffentlichungstag der Anmeldung: **10.07.2019**
(21) Anmeldenummer: 18212710.0
(22) Anmeldetag: 23.06.2016
(51) Int. Cl.: E04H 12/08, E04H 12/34

(54) **TEILSTÜCK EINER TURMSEKTION, EIN TURM UND EIN VERFAHREN ZUM HERSTELLEN EINES TEILSTÜCKS EINER TURMSEKTION**

(30) Priorität: 26.06.2015 DE 102015110344
(62) Teilanmeldung aus: 16731606.6
(71) Anmelder: eno energy systems GmbH, 18055 Rostock (DE)
(72) Erfinder: PORM, Karsten, 18236 Kröpelin (DE); BOCKHOLT, Stefan, 18255 Kühlungsborn (DE); JAKOWSKI, Klaus, 18190 Sanitz, OT Niekrenz (DE); AHRENS, Robin, 18057 Rostock (DE); BULL, Michael, 18198 Kritzmow OT Groß Schwaß (DE)
(74) Vertreter: 2SPL Patentanwälte PartG mbB

(57) **Zusammenfassung**

Ein Teilstück 100 einer zweiteiligen Turmsektion eines Turms. Das Teilstück umfasst ein Stahlschalensegment 120 des Teilstücks. Das Stahlschalensegment 120 bildet eine Halbschale der zweiteiligen Turmsektion und das Stahlschalensegment 120 weist eine Dicke von mehr als 35 mm aufweist. Ferner umfasst das Teilstück zumindest einen bei einer Längskante des Stahlschalensegments 120 befestigten Längsflansch 130 zum Verbinden mit einem Längsflansch des zweiten Teilstücks der zweiteiligen Turmsektion, die die zweite Halbschale der zweiteiligen Turmsektion bildet.

## Beschreibung

Beispiele beziehen sich auf Konzepte zur Herstellung und Bauweise von Türmen und Teilen von Türmen und insbesondere auf ein Teilstück einer Turmsektion, ein Turm und ein Verfahren zum Herstellen eines Teilstücks einer Turmsektion.

In vielen Bereichen der Technik und des Bauwesens werden Bauteile, Maschinen, Anlagen und Systeme verwendet, deren Komponenten zum Teil mehrere zehn Meter lang sind und aus unterschiedlichen Gründen gegebenenfalls nicht weiter zerlegbar sind. Beispiele kommen aus vielen unterschiedlichen Bereichen und umfassen beispielsweise Turmbauteile, mechanisch besonders beanspruchte Träger, Prozessbehälter, Rotorblätter für Windenergieanlagen, Tragflächen für Luftfahrzeuge, Antriebswellen für Wasserfahrzeuge und andere entsprechende längliche Bauteile, um nur einige Beispiele zu nennen.

Gerade bei dem Transport dieser und ähnlicher Bauteile treten häufig Probleme auf, wenn die betreffenden Bauteile auf dem Landweg zu Binnenlandstandorten oder Verladeorten transportiert werden sollen. So können sich beispielsweise Höhenbegrenzungen während des Transports oder auch Probleme hinsichtlich von Kurvenradien aufgrund der Länge der betreffenden Bauteile ergeben. Beim Überlandtransport können so beispielsweise aufgrund von Brückendurchfahrten maximal durchfahrbare Höhen zu beachten sein. Aber auch aufgrund der Länge der betreffenden Bauteile von zum Teil mehreren zehn Metern kann bei einem Liegendtransport ein minimaler Kurvenradius häufig nicht unterschritten werden, was beispielsweise bei einem Transport auf der Straße zu Problemen führen kann.

Insbesondere für die Erzeugung von Energie aus Wind werden Turbinen mit hohen Türmen gebaut. Durch die mit der Höhe zunehmenden Windgeschwindigkeiten können mit größeren Nabenhöhen höhere Erträge erzielt werden. Dazu werden üblicherweise Windenergieanlagen mit Turmhöhen von oft über 100 m in Stahl-, Beton-, Holz- oder Hybridtürmen in Rohr- oder Gitterbauweise errichtet.

Aufgrund der vergleichsweise geringen Massen und Kosten werden Stahlrohrtürme bevorzugt. Aufgrund von Massen- und Größenbegrenzungen auf den Transportwegen können solche Türme jedoch nicht als Einzelteil transportiert werden. Daher werden meist mehrere Turmsektionen mit einer Länge von jeweils weniger als 30 m und einer Einzelmasse von meist weniger als 100 t gefertigt und auf der Baustelle miteinander verbunden. Solche Turmsektionen sind dabei meist auf einen für Brückendurchfahrten geeigneten Durchmesser von 4,0 - 4,5 m begrenzt.

Besonders für große Anlagen ist eine solche Durchmesserbegrenzung mit den auftretenden Lasten für einen Stabilitätsnachweis oft nicht in Einklang zu bringen. Daher ist es oft notwendig, den Durchmesser mindestens im unteren Bereich des Turmes so zu vergrößern, dass ein Transport als Rohrsektion nicht möglich ist. Solche Sektionen müssen dann entweder in Ihrer Länge begrenzt werden, so dass der Transport aufrecht erfolgen kann, oder zusätzlich längs getrennt werden. Der Zusammenbau eines Turms aus mehreren Teilen kann zu Problemen bei der Berechnung und dem Nachweis der Standfestigkeit führen.

Es besteht daher ein Bedarf daran, ein Konzept zur Herstellung und Bauweise von Türmen und Teilen von Türmen bereitzustellen, dass eine Verbesserung der Standfestigkeit, einen einfacheren Transport und/oder eine einfachere Montage und/oder Herstellung ermöglicht.

Diesem Bedarf tragen die Gegenstände der Ansprüche Rechnung.

Einige Ausführungsbeispiele beziehen sich auf ein Teilstück einer Turmsektion. Das Teilstück weist ein Schalensegment der Turmsektion und zumindest einen an einer Längsseite des Schalensegments befestigten Längsflansch zum Verbinden mit einem Längsflansch eines weiteren Teilstücks der Turmsektion auf. Dabei weist der Längsflansch einen Teil einer Oberflächenkontur auf, der sich von einer zu einer Verbindung mit einem Längsflansch eines weiteren Teilstücks vorgesehen Kontaktfläche des Längsflansches zu einer mit dem Schalensegment verbundenen Anschlussfläche erstreckt. Der Teil der Oberflächenkontur weist einen Abstand zu einer durch die Kontaktfläche verlaufenden Kontaktebene auf.

Durch die Verwendung von zuvor oder im Folgenden beschriebenen Teilstücken kann die Herstellung und/oder der Transport von Turmsektionen deutlich vereinfacht werden, da die Schale der Turmsektion im Werk einfach entlang der Längsflansche in mehrere Teile geteilt werden kann und danach mit im Wesentlichen gleicher Geometrie am Ort der Errichtung wieder zusammengesetzt werden kann.

Eine Turmsektion ist z.B. ein Teil eines Turms, der beispielsweise eine Symmetrie bezüglicher einer im Wesentlichen vertikalen Turmachse aufweist. Beispielsweise kann die Turmsektion (die Schale der Turmsektion) im Wesentlichen eine zylindermantel-förmige oder kegelstumpfmantel-förmige Geometrie aufweisen.

Das Teilstück der Turmsektion wird beispielsweise bei der Trennung der Schale der Turmsektion in kleinere Teile erzeugt. Dementsprechend umfasst das Teilstück ein Segment der Schale der Turmsektion. Das Schalensegment umfasst beispielsweise zwei sich im Wesentlichen horizontal (oder orthogonal zu einer Turmachse oder Symmetrieachse der Turmsektion) erstreckende Querseiten und zwei sich im Wesentlich orthogonal zu den Querseiten (z.B. im Wesentlichen vertikal oder in Richtung der Turmachse) erstreckende Längsseiten. Die Längsseiten können z.B. für Hohlzylinder-förmige Turmsektionen im Wesentlichen parallel zu der Turmachse sein oder von der parallelen Richtung für Hohlkegelstumpf-förmige Turmsektionen leicht abweichen (z.B. weniger als 3° oder weniger als 1°). Das Schalensegment kann z.B. eine Form aufweisen, die im Wesentlichen einen Teil einer zylindermantel-förmigen oder kegelstumpfmantel-förmigen Geometrie bildet. Das Schalensegment ist beispielsweise Teil der Außenschale des Turms und kann z.B. aus Stahl gefertigt sein. Die Querseite des Schalensegments kann beispielsweise eine Länge von mehr als 4 m (oder mehr als 6 m oder mehr als 8 m) aufweisen. Die Längsseite des Schalensegments kann z.B. eine Länge von mehr als 5 m (oder mehr als 10 m oder mehr als 20 m) aufweisen. Das Schalensegment kann beispielsweise eine Dicke von mehr als 25 mm (oder mehr als 35 mm oder mehr als 50 mm) aufweisen.

Das Teilstück der Turmsektion umfasst ferner zumindest einen Längsflansch. Der Längsflansch ist an einer Längsseite des Schalensegments befestigt (z.B. durch eine Schweißnaht). Der Längsflansch kann an einer Außenseite oder an einer Innenseite des Schalensegments befestigt sein.

Unter der Oberflächenkontur des Längsflansches kann beispielsweise die Form der gesamten Oberfläche des Längsflansches bezeichnet sein. Beispielsweise sind die zu einer Verbindung mit einem Längsflansch eines weiteren Teilstücks vorgesehene Kontaktfläche des Längsflansches und die Anschlussfläche über die der Längsflansch mit dem Schalensegment verbunden ist Teil der Oberflächenkontur. Die Kontaktfläche ist beispielsweise eine im Wesentlichen ebene Fläche, die beim Zusammenbau der Turmsektion aus mehreren Teilstücken mit dem Längsflansch eines weiteren Teilstücks in direktem Kontakt ist.

Die Oberflächenkontur weist in einem Teil, der sich von einer zu der Verbindung mit einem Längsflansch eines weiteren Teilstücks vorgesehen Kontaktfläche des Längsflansches zu der mit dem Schalensegment verbundenen Anschlussfläche erstreckt, einen Abstand zu der durch die Kontaktfläche verlaufenden Kontaktebene aufweist. Die Kontaktebene ist z.B. eine virtuelle Ebene, die im Wesentlichen (z.B. unter Vernachlässigung von Unebenheiten der Kontaktfläche) durch die Kontaktfläche des Längsflansches verläuft. Der Abstand zu der Kontaktebene kann beispielsweise von der Kontaktfläche in Richtung des Schalensegments sprunghaft, kontinuierlich, linear oder auf andere Weise ansteigen. Beispielsweise kann der Teil der Oberflächenkontur des Längsflansches, der zwischen der Kontaktfläche und der Anschlussfläche angeordnet ist, an einem an die mit dem Schalensegment verbundene Anschlussfläche angrenzenden Ende einen Abstand von mehr als 1,5 mm (oder mehr als 3 mm oder mehr als 5 mm) zu der Kontaktebene aufweisen. Durch den Abstand zu der Kontaktebene ergibt sich beispielsweise ein Spalt zwischen dem Ende des Längsflansches und dem Längsflansch eines weiteren Teilstücks, wenn die Teilstücke miteinander verbunden sind. Durch die beschriebene Oberflächenkontur kann beispielsweise die Anordnung eines Abstandhalterbauteils zwischen zwei zu verbindenden Längsflanschen von Teilstücken vermieden werden. Der Längsflansch des Teilstücks kann einstückig ausgebildet sein. Auf diese Weise können Teilstücke mit einer geringen Anzahl von Bauteilen einfach hergestellt werden.

Beispielsweise bildet der Teil der Oberflächenkontur des Längsflansches, der zwischen der Kontaktfläche und der Anschlussfläche angeordnet ist, eine Kerbe oder eine Freistich-förmige Ausnehmung. Eine Freistich-förmige Ausnehmung hat beispielsweise eine im Wesentlichen gleiche Geometrie wie ein Freistich, der Längsflansch ist jedoch nicht ein rotationssymmetrisches Bauteil, wie es bei einem Freistich üblich ist.

Der Längsflansch kann beispielsweise an einem dem Schalensegment zugewandten Ende eine geringere Dicke aufweisen als in einem Bereich der Kontaktfläche. Alternativ kann der Längsflansch zwischen der Kontaktfläche und der Anschlussfläche von der Kontaktebene weg gebogen sein und eine im Wesentlichen konstante Dicke aufweisen.

Es kann ausreichend sein, lediglich einen Längsflansch des Teilstücks mit der beschriebenen Oberflächenkontur zu verwenden. Alternativ kann jeweils ein Längsflansch mit der beschriebenen Oberflächenkontur an beiden Längsseiten des Schalensegments angeordnet sein.

Der Längsflansch kann sich über die gesamte Längsseite des Schalensegments des Teilstücks erstrecken. Alternativ kann der Längsflansch kürzer als die Längsseite des Schalensegments sein, sodass sich zumindest an den Enden der Längsseite kein Längsflansch erstreckt (z.B. entlang zumindest der letzten 10 cm, zumindest der letzten 30 cm oder zumindest der letzten 50 cm). Dadurch kann die Befestigung eines Querflansches entlang einer Querseite des Schalensegments des Teilstücks erleichtert werden.

Das Teilstück kann optional einen im Wesentlichen kreissegment-förmigen Querflansch aufweisen. Der Querflansch kann an einer Querseite des Schalensegments des Teilstücks befestigt sein. Ferner kann optional auch an beiden Querseiten des Schalensegments des Teilstücks jeweils ein Querflansch befestigt sein. Der Querflansch kann verwendet werden, um das Teilstück mit einer anderen Turmsektion, einem Teilstück einer anderen Turmsektion oder einem Fundament zu verbinden (z.B. durch Schrauben).

Optional kann in dem Schalensegment des Teilstücks eine Türöffnung vorgesehen sein.

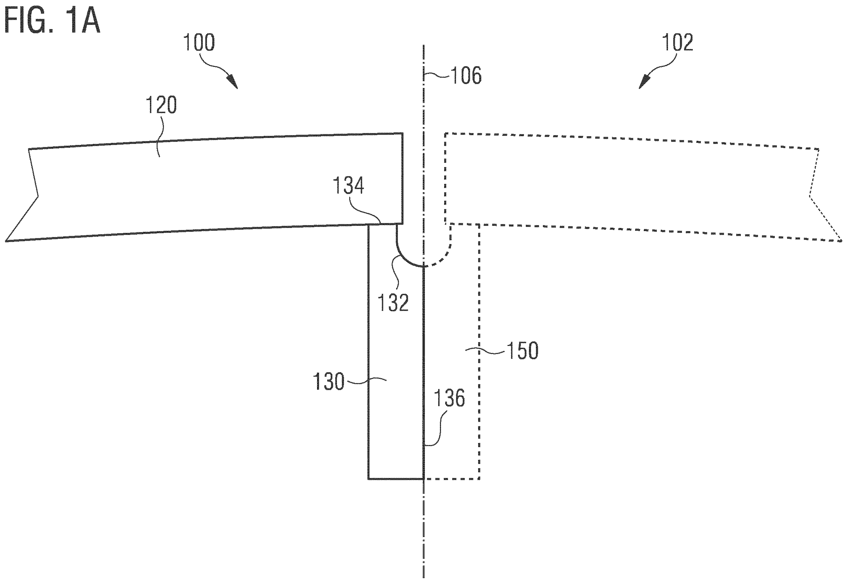

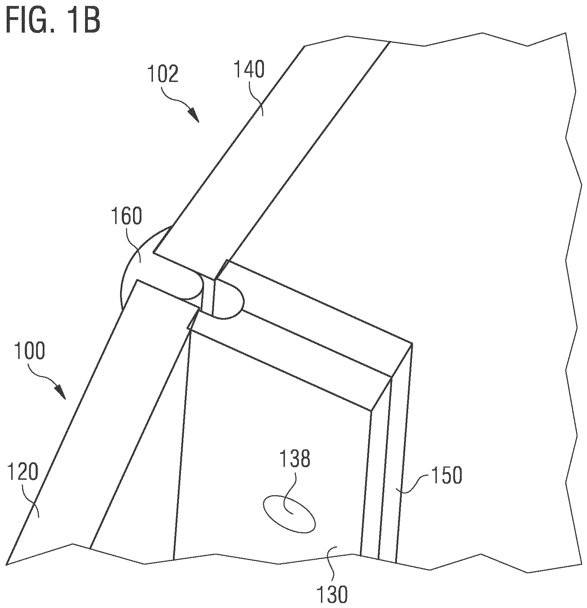

Weitere Einzelheiten und optionale Aspekte des beschriebenen Teilstücks der Turmsektion sind in Verbindung mit dem vorgeschlagenen Konzept oder einem oder mehreren der im Folgenden beschriebenen Ausführungsbeispiele (z. B. Fig. 1 bis 6) beschrieben.

Einige Ausführungsbeispiele beziehen sich auf einen Turm mit einer Mehrzahl von Turmsektionen. Dabei weist zumindest eine Turmsektion zumindest zwei Teilstücke nach einem der vorhergehenden oder nachfolgenden Ausführungsbeispiele auf. Der Längsflansch eines ersten Teilstücks der zumindest zwei Teilstücke ist mit einem Längsflansch eines zweiten Teilstücks der zumindest zwei Teilstücke direkt verbunden. Ferner ist zwischen dem Schalensegment des ersten Teilstücks und dem Schalensegment des zweiten Teilstücks ein Spalt vorhanden.

Als Turm wird z.B. ein vertikal ausgerichtetes Bauwerk bezeichnet, beispielsweise für eine Windenergieanlage. Die Definition eines Turms enthält sowohl abgespannte als auch freistehende Konstruktionen und berücksichtigt somit auch Konstruktionen, die manchmal auch als Mast bezeichnet werden. Beispielsweise kann der Turm ein Turm einer Windenergieanlage sein.

In dem Spalt zwischen dem Schalensegment des ersten Teilstücks und dem Schalensegment des zweiten Teilstücks kann ein Dichtelement (z.B. T-förmiges Dichtelement) angeordnet sein.

Weitere Einzelheiten und optionale Aspekte des beschriebenen Turms sind in Verbindung mit dem vorgeschlagenen Konzept oder einem oder mehreren der vorhergehend oder im Folgenden beschriebenen Ausführungsbeispiele (z. B. Fig. 1 bis 6) beschrieben.

Einige weitere Ausführungsbeispiele beziehen sich auf ein Verfahren zum Herstellen mindestens eines Teilstücks einer Turmsektion. Das Verfahren umfasst ein Befestigen von zwei benachbarten, einstückigen Längsflanschen an einer Schale einer Turmsektion, sodass die beiden benachbarten, einstückigen Längsflansche entlang einer Kontaktfläche direkt miteinander in Kontakt sind. Ferner umfasst das Verfahren ein Trennen der Schale zumindest entlang der beiden benachbarten, einstückigen Längsflansche. Dabei ist zumindest nach dem Trennen an den beiden benachbarten, einstückigen Längsflanschen ein Spalt zwischen den der Schale zugewandten Enden der beiden benachbarten, einstückigen Längsflansche vorhanden.

Durch die Möglichkeit beim Trennen einen Spalt zu erzeugen oder durch die Existenz eines Spalts bereits vor dem Trennen kann die Trennung der Schale der Turmsektion deutlich vereinfacht werden.

Die Längsflansche können beispielsweise durch Schweißen mit der Schale verbunden werden. Dabei kann es ausreichend sein, eine Schweißnaht an einer dem jeweils anderen Längsflansch abgewandten Seite vorzusehen. Optional kann nach dem Trennen auch auf der gegenüberliegenden Seite eine Schweißnaht vorgesehen werden. Die optionale Schweißnaht auf der gegenüberliegenden Seite kann durch den vorhandenen Spalt ermöglicht werden, da beispielsweise durch den Spalt ausreichend Platz für die Schweißnaht vorhanden ist.

Die Längsflansche sind an der Schale so befestigt, dass die Kontaktflächen der Längsflansche in direktem Kontakt miteinander sind. Es ist als beispielsweise ein Zwischenbauteile oder Abstandshalterbauteil zwischen den Längsflanschen angeordnet.

Der Spalt zwischen den Enden der beiden benachbarten, einstückigen Längsflanschen kann bereits nach dem Befestigen und vor dem Trennen an den der Schale zugewandten Enden der beiden benachbarten, einstückigen Längsflansche vorhanden sein. Dazu kann einer oder beide der benachbarten, einstückigen Längsflansche beispielsweise eine Oberflächenkontur aufweisen, wie es zuvor beschrieben wurde oder in den nachfolgenden Figuren gezeigt ist. Die Enden der beiden Längsflansche sind beispielsweise jene Teile der Längsflansche, die näher als 5 cm oder näher als 2 cm oder näher als 1 cm an der Schale angeordnet sind. Beispielsweise kann der Spalt zwischen den beiden benachbarten Längsflanschen größer sein als ein durch das Trennen erzeugter Spalt zwischen den zumindest zwei Schalensegmenten. Dadurch kann beispielsweise die Schale geteilt werden ohne die Längsflansche durch das Trennwerkzeug zu beschädigen.

Beispielsweise kann der Spalt zwischen den beiden benachbarten Längsflanschen um mehr als 5mm (oder mehr als 1cm oder mehr als 2cm) größer als der Spalt zwischen den Schalensegmenten der zumindest zwei Teilstücke sein. Der Spalt zwischen den Enden der beiden benachbarten Längsflansche kann beispielsweise größer als 3mm (oder größer als 6mm oder größer als 1cm) und/oder kleiner als 5cm (oder kleiner als 2cm) sein. Der Spalt zwischen den Schalensegmenten der zumindest zwei Teilstücke kann beispielsweise größer als 1 mm (oder größer als 2mm oder größer als 5mm) und/oder kleiner als 1cm (oder kleiner als 5mm) sein.

Alternativ kann die Schale so getrennt werden, dass der Spalt nach dem Trennen an den der Schale zugewandten Enden der beiden benachbarten, einstückigen Längsflansche zwischen den Enden der beiden benachbarten, einstückigen Längsflansche vorhanden ist. Dabei wird beispielsweise durch das Trennwerkzeug (z.B. eine Säge) durch die Schale bis in die Längsflansche hinein geschnitten. Die Längsflansche können eine größere Dicke aufweisen als ein durch das Trennen erzeugter Spalt, sodass sich der Spalt zwischen den erzeugten Schalensegmenten bis in die Längsflansche hinein erstrecken kann.

Die zwei benachbarten Längsflansche können während des Trennens der Schale durch eine lösbare Verbindung (z.B. Schrauben oder schweißtechnisches Zusammenheften) miteinander verbunden sein. Die Teilstücke der Turmsektion können durch Lösen der Verbindung voneinander getrennt werden und getrennt voneinander an den Aufstellort geliefert werden. Am Aufstellort können die Teilstücke über die Längsflansche wieder miteinander verbunden werden.

Weitere Einzelheiten und optionale Aspekte des beschriebenen Verfahrens sind in Verbindung mit dem vorgeschlagenen Konzept oder einem oder mehreren der vorhergehend oder im Folgenden beschriebenen Ausführungsbeispiele (z. B. Fig. 1 bis 6) beschrieben.

Nachfolgend werden unter Bezugnahme auf die beiliegenden Figuren Beispiele näher beschrieben und erläutert.
- Fig. 1A: zeigt eine schematische Darstellung eines Teilstückes einer Turmsektion;
- Fig. 1B: zeigt eine schematische Darstellung einer Verbindungsstelle zweier Teilstücke einer Turmsektion;
- Fig. 2: zeigt einen schematischen Querschnitt einer Windenergieanlage;
- Fig. 3: zeigt ein Flussdiagramm eines Verfahrens zum Herstellen eines Teilstücks einer Turmsektion;
- Fig. 4A: zeigt eine schematische Teilansicht eines Längsflansches vor Verbinden mit einer Schale einer Turmsektion;
- Fig. 4B: zeigt eine schematische Ansicht eines Endes einer Turmsektion nach Befestigen von zwei benachbarten Längsflanschen und vor Trennen der Schale;
- Fig. 4C: zeigt einen schematischen Querschnitt von zwei benachbarten Längsflanschen vor Trennen der Schale;
- Fig. 4D: zeigt eine schematische Ansicht eines Endes einer Turmsektion nach Trennen der Schale;
- Fig. 4E: zeigt eine schematische Ansicht eines Teilstücks einer Turmsektion;
- Fig. 4F: zeigt eine schematische Ansicht eines Details der Turmsektion aus Fig. 4E;
- Fig. 4G: zeigt einen schematischen Querschnitt von zwei benachbarten Längsflanschen nach Trennen der Schale;
- Fig. 5A-5D: zeigen Beispiele für schematische Querschnitte von unterschiedlichen Implementierungen von benachbarten Längsflanschen vor Trennen der Schale;
- Fig. 6: zeigt einen schematischen Querschnitt von zwei benachbarten Längsflanschen beim Trennen der Schale;
- Fig. 7: zeigt ein Flussdiagramm eines Verfahrens zum Herstellen einer Turmsektion; und
- Fig. 8A-8I: zeigen schematische Querschnitte von Teilen einer Turmsektion in unterschiedlichen Stadien während der Herstellung der Turmsektion.

Einige Beispiele werden nun unter Bezugnahme auf die beiliegenden Figuren näher beschrieben. In den Figuren können die Dickenabmessungen von Linien, Bereichen, Schichten und/oder Regionen um der Deutlichkeit Willen übertrieben dargestellt sein.

Bei der nachfolgenden Beschreibung der beigefügten Figuren, die lediglich einige exemplarische Beispiele zeigen, können gleiche Bezugszeichen gleiche oder vergleichbare Komponenten bezeichnen. Ferner können zusammenfassende Bezugszeichen für Komponenten und Objekte verwendet werden, die mehrfach in einem Beispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

Obwohl Beispiele auf verschiedene Weise modifiziert und abgeändert werden können, werden nur einige Beispiele in den Figuren und in der vorliegenden Beschreibung ausführlich dargestellt. Es sei jedoch klargestellt, dass nicht beabsichtigt ist, Beispiele auf die jeweils offenbarten Formen zu beschränken, sondern dass Beispiele vielmehr sämtliche funktionale und/oder strukturelle Modifikationen, Äquivalente und Alternativen, die im Bereich der Erfindung liegen, abdecken sollen. Gleiche Bezugszeichen bezeichnen in der gesamten Figurenbeschreibung gleiche oder ähnliche Elemente, wie zuvor erläutert wurde.

Fig. 1A zeigt eine schematische Darstellung eines Teilstückes 100 einer Turmsektion. Das Teilstück 100 der Turmsektion weist ein Schalensegment 120 der Turmsektion und zumindest einen an einer Längsseite des Schalensegments 120 befestigten Längsflansch 130 zum Verbinden mit einem Längsflansch 150 eines weiteren Teilstücks 102 der Turmsektion auf. Dabei weist der Längsflansch 130 einen Teil 132 einer Oberflächenkontur auf, der sich von einer zu einer Verbindung mit einem Längsflansch 150 eines weiteren Teilstücks 102 vorgesehen Kontaktfläche 136 des Längsflansches 130 zu einer mit dem Schalensegment 120 verbundenen Anschlussfläche 134 erstreckt. Der Teil 132 der Oberflächenkontur weist einen Abstand zu einer durch die Kontaktfläche 136 verlaufenden Kontaktebene 106 auf.

Der Teil 132 der Oberflächenkontur hat beispielsweise einen von der zur Verbindung mit dem Längsflansch 150 des weiteren Teilstücks 102 vorgesehen Kontaktfläche 136 zu der mit dem Schalensegment 120 verbundenen Anschlussfläche 134 zunehmenden Abstand.

Der Längsflansch 130 weist beispielsweise an einem dem Schalensegment 120 zugewandten Ende eine geringere Dicke auf als in einem Bereich des Längsflansches 130, der beim Verbinden mit dem Längsflansch 150 des weiteren Teilstücks 102 mit dem Längsflansch 150 des weiteren Teilstücks 102 in Kontakt ist.

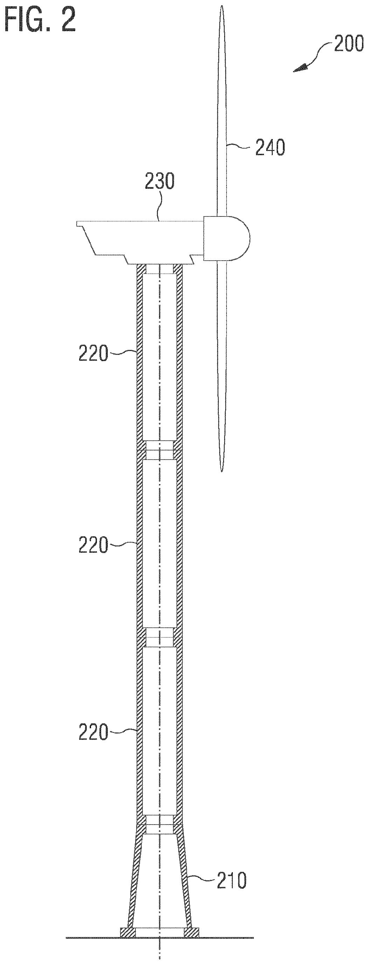

Weitere Einzelheiten und optionale Aspekte des in Fig. 1A gezeigten Teilstücks der Turmsektion sind in Verbindung mit dem vorgeschlagenen Konzept oder einem oder mehreren der zuvor oder im Folgenden beschriebenen Ausführungsbeispiele (z. B. Fig. 2 bis 6) beschrieben.

Fig. 1B zeigt eine schematische Darstellung einer Verbindungsstelle zweier Teilstücke 100, 102 einer Turmsektion. Die Teilstücke 100, 102 weisen jeweils ein Schalensegment 120, 140 und zumindest einen Längsflansch 130, 150 auf. Die Längsflansche 130, 150 weisen Löcher 138 zum Verbinden der Längsflansche (z.B. durch Schrauben) auf. Ferner ist zwischen den Enden der Längsflansche 130, 150, die den Schalensegmenten 120, 140 zugewandt sind, ein Spalt vorhanden. Ebenso ist zwischen den beiden Schalensegmenten 120, 140 ein Spalt angeordnet. Zusätzlich ist in dem Spalt zwischen den Schalensegmenten 120, 140 zur Abdichtung des Spalts ein im Wesentlichen T-förmiges Dichtelement angeordnet.

Beispielsweise zeigt Fig. 1B eine Situation nach dem Zusammenbau (Schrauben nicht dargestellt).

Weitere Einzelheiten und optionale Aspekte des in Fig. 1B gezeigten Teilstücks der Turmsektion sind in Verbindung mit dem vorgeschlagenen Konzept oder einem oder mehreren der zuvor oder im Folgenden beschriebenen Ausführungsbeispiele (z. B. Fig. 2 bis 6) beschrieben.

Fig. 2 zeigt einen schematischen Querschnitt einer Windenergieanlage 200 entsprechend einem Ausführungsbeispiel. Die Windenergieanlage 200 umfasst einen Turm und ein Maschinenhaus 230 mit angeschlossenem Rotor 240. Der Turm umfasst eine hohlkegelstumpfförmige untere Turmsektion 210 und drei hohlzylindrische obere Turmsektion 220. Zumindest die untere Turmsektion 210 umfasst zwei Teilstücke, wie sie mit dem beschriebenen Konzept oder in Zusammenhang mit einem oder mehreren der vorhergehend oder nachfolgend beschriebenen Ausführungsbeispiele (z.B. Fig. 1 oder Fig. 3 bis 4G) beschrieben wurden. Beispielsweise können die Teilstücke und/oder Turmsektionen durch Verschrauben oder ein Schweißverfahren am Ort der Errichtung miteinander verbunden werden.

Weitere Einzelheiten und optionale Aspekte des Turms oder einer Turmsektion sind in Verbindung mit dem vorgeschlagenen Konzept oder einem oder mehreren der zuvor oder im Folgenden beschriebenen Ausführungsbeispiele (z. B. Fig. 1 oder 3 bis 4G) besch rieben.

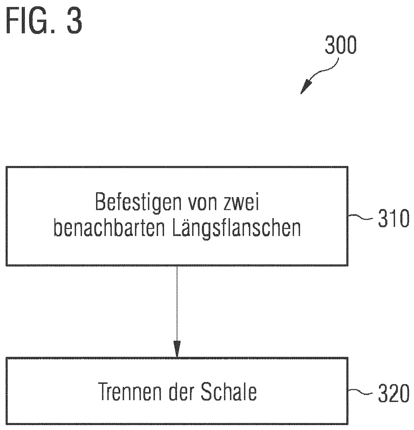

Fig. 3 zeigt ein Flussdiagramm eines Verfahrens zum Herstellen mindestens eines Teilstücks einer Turmsektion. Das Verfahren 300 umfasst ein Befestigen 310 von zwei benachbarten, einstückigen Längsflanschen an einer Schale einer Turmsektion, sodass die beiden benachbarten, einstückigen Längsflansche entlang einer Kontaktfläche direkt miteinander in Kontakt sind. Ferner umfasst das Verfahren ein Trennen 320 der Schale zumindest entlang der beiden benachbarten, einstückigen Längsflansche. Dabei ist zumindest nach dem Trennen an den beiden benachbarten, einstückigen Längsflanschen ein Spalt zwischen den der Schale zugewandten Enden der beiden benachbarten, einstückigen Längsflansche vorhanden.

Weitere Einzelheiten und optionale Aspekte des Verfahrens 300 sind in Verbindung mit dem vorgeschlagenen Konzept oder einem oder mehreren der zuvor oder im Folgenden beschriebenen Ausführungsbeispiele (z. B. Fig. 1 bis 2 oder 4A bis 4G) beschrieben.

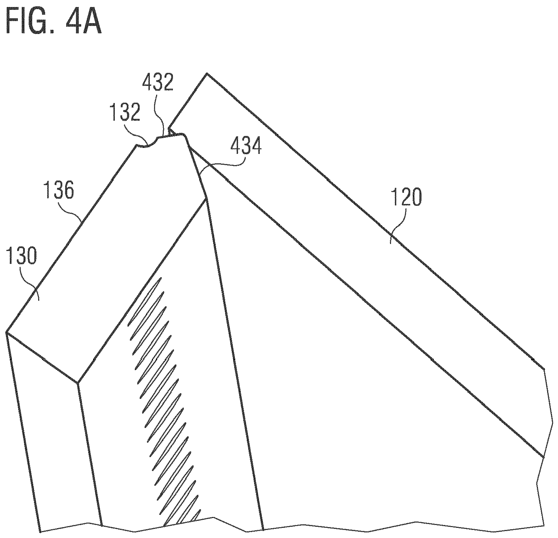

Fig. 4A zeigt eine schematische Teilansicht eines Längsflansches 130 vor dem Verbinden mit einer Schale 120 einer Turmsektion. Der Längsflansch wird dazu an der dafür vorgesehene Stelle entlang der Schale 120 (hier nur ein Teil der Schale gezeigt, die sich vor dem Trennen weiter als in Fig. 4A gezeigt erstreckt) angeordnet und beispielsweise durch eine Schweißnaht an einer dafür an einer der Kontaktfläche 136 des Längsflansches abgewandten Seite angeordneten Stelle 434 mit der Schale 120 verbunden werden. Der Längsflansch ist in Fig. 4A an der Innenseite der Schale 120 angeordnet, kann aber alternativ auch an der Außenseite der Schale 120 angeordnet werden. Optional kann nach dem Trennen eine weitere Schweißnaht an einer der Kontaktfläche 136 des Längsflansches zugewandten Seite angeordneten Stelle 432 zwischen dem Längsflansch und der Schale 120 erzeugt werden.

Beispielsweise zeigt Fig. 4A eine Position einer Hälfte des Längsflansches zu einem Längsbauteil des Turmes.

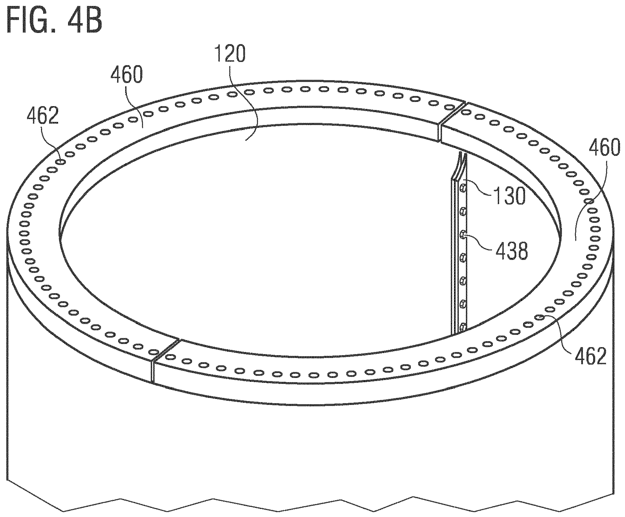

Fig. 4B zeigt eine schematische Ansicht eines Endes einer Turmsektion nach dem Befestigen von zwei benachbarten Längsflanschen 130 und vordem Trennen der Schale 120. Die Längsflansche 130 sind beispielsweise mit Schrauben 438 miteinander verbunden und können so nach dem Trennen der Schale 120 wieder von einander gelöst werden. Am oberen und/oder unteren Ende der Schale 120 der Turmsektion können Querflansche 460 zum Verbinden mit anderen Turmsektionen oder einem Fundament angeordnet sein. Die Querflansche 460 können über den Umfang der Turmsektion in mehrere Teile geteilt sein. Beispielsweise sind die Querflansche 460 an denselben Stellen unterteilt, an denen die Schale 120 entlang der Längsflansche 130 getrennt wird. Der Querflansche können Löcher 462 zum späteren Verbinden mit anderen Turmsektionen oder einem Fundament durch Schrauben aufweisen.

Beispielsweise zeigt Fig. 4B eine Schrägansicht nach dem Verschrauben und Anschweißen der Längsflansche, vor dem Trennen der Turmschale.

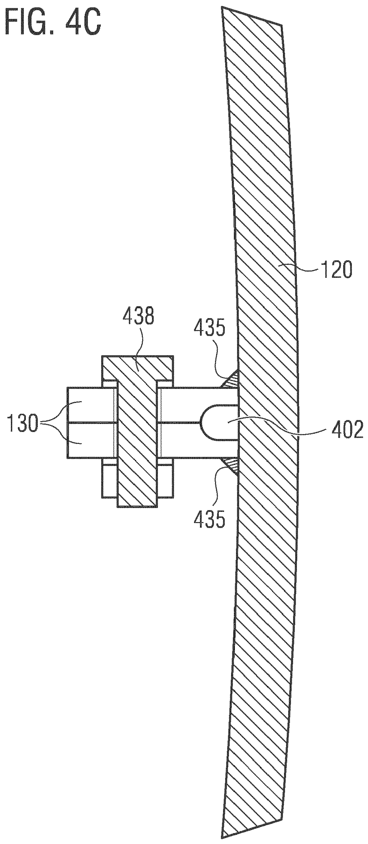

Fig. 4C zeigt einen schematischen Querschnitt von zwei benachbarten Längsflanschen 130 vor dem Trennen der Schale 120. Die beiden Längsflansche 130 sind über eine Schweißnaht 435 mit der Schale 120 verbunden. Ferner sind die Längsflansche miteinander durch Schrauben 438 verbunden. Die Längsflansche 130 weisen an ihren der Schale 130 zugewandten Enden Freistich-förmige Ausnehmungen auf, sodass zwischen den Längsflanschen 130 im Bereich der Schale 120 ein Spalt 402 vorhanden ist. Die Schale 120 kann so beispielsweise entlang des Spalts (z.B. durch eine Säge) getrennt werden ohne die Längsflansche 130 zu beschädigen.

Beispielsweise zeigt Fig. 4C einen Schnitt nach dem Verschrauben und Anschweißen der Längsflansche 130, vor dem Trennen der Turmschale.

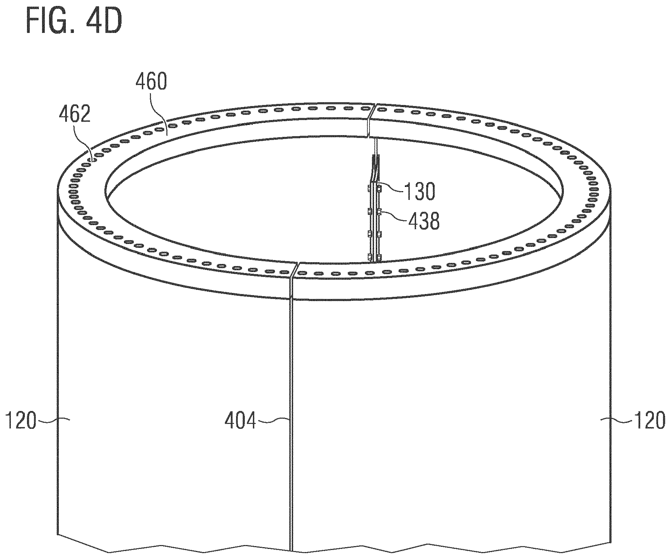

Fig. 4D zeigt eine schematische Ansicht eines Endes einer Turmsektion nach Trennen der Schale 120. Durch das Trennen entlang der Längsflansche 130 entsteht zwischen den Schalensegmenten 120 ein Spalt 404. Der Spalt 404 zwischen den Schalensegmenten 120 ist beispielsweise kleiner oder gleich breit, wie ein Spalt zwischen den Längsflanschen 130 an deren den Schalensegmenten zugewandten Enden.

Beispielsweise zeigt Fig. 4D eine Schrägansicht nach dem Trennen der Turmschale.

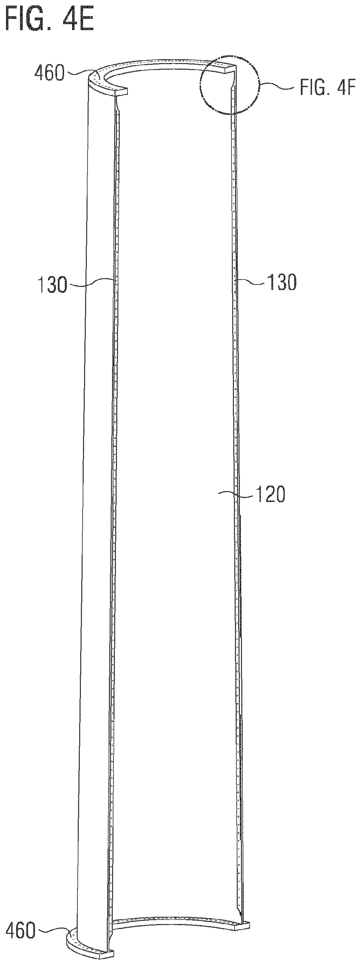

Fig. 4E zeigt eine schematische Ansicht eines Teilstücks einer Turmsektion. Beispielsweise zeigt Fig. 4E einen Bereich der geteilten Turmschale 120 mit fertig angeschweißten Längsflanschen 130.

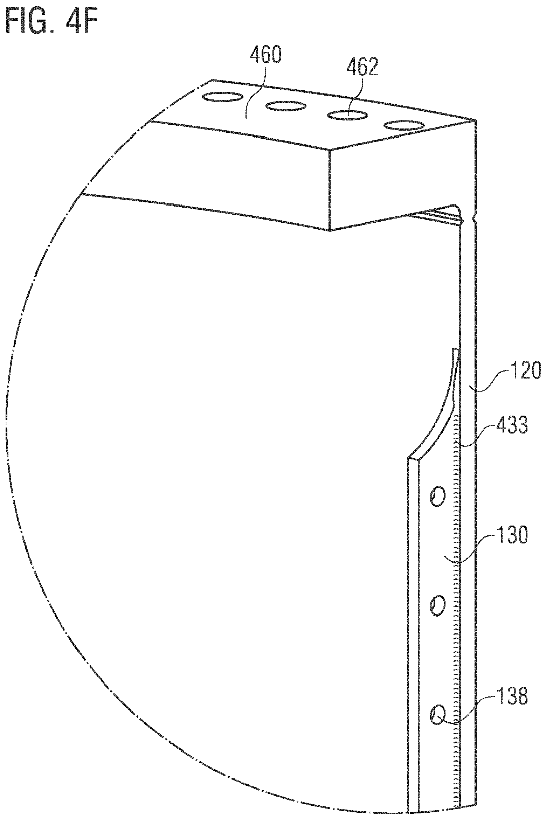

Fig. 4F zeigt eine schematische Ansicht eines Details der Turmsektion aus Fig. 4E. Der Längsflansch 130 kann nach Trennen auch an der Seite mit der Freistich-förmigen Ausnehmung mit einer Schweißnaht 433 versehen werden, um die Befestigung an der Schale 120 zu verbessern. Der Längsflansch kann in einem definierten Abstand (z.B. mehr als 10 cm, mehr als 30 cm oder mehr als 50 cm) zu einem oberen und/oder unteren Ende der Längsseite der Schale 120 enden, um beispielsweise eine einfache Befestigung des Querflansches 460 zu ermöglichen.

Beispielsweise zeigt Fig. 4F eine Vergrößerung eines Bereichs der geteilten Turmschale mit fertig angeschweißten Längsflanschen (Längsnaht im Bereich der Schnittfläche zu sehen).

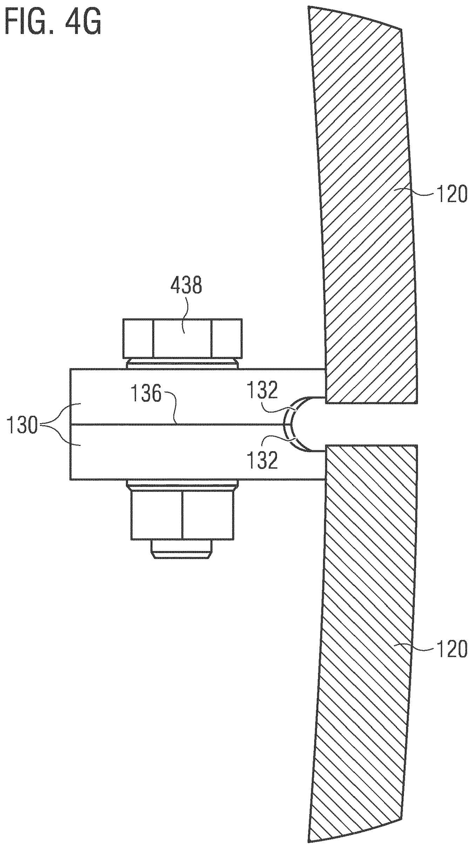

Fig. 4G zeigt einen schematischen Querschnitt von zwei benachbarten Längsflanschen 130 nach Trennen der Schale 120. Durch das Trennen der Schale 120 ergibt sich ein Spalt zwischen den Schalensegmenten 120. Durch die Freistich-förmigen Ausnehmungen 132 an den Enden der Längsflansche 130 kann die Schale 120 getrennt werden, ohne die Längsflansche 130 beim Trennen zu beschädigen. Die Teilstücke der Turmsektion können durch Lösen der Schrauben 438 an den Längsflanschen 130 voneinander getrennt werden und getrennt voneinander an den Aufstellort geliefert werden. Am Aufstellort können die Teilstücke über die Längsflansche 130 wieder miteinander verbunden werden. Auch ist es möglich, nach dem Trennen und Lösen der Schrauben eine zusätzliche Schweißnaht aufzubringen, wobei die Sektion wieder in gleicher Weise zusammengesetzt werden kann.

Beispielsweise zeigt Fig. 4G einen Querschnitt nach dem Errichten, ohne Darstellung der Dichtung.

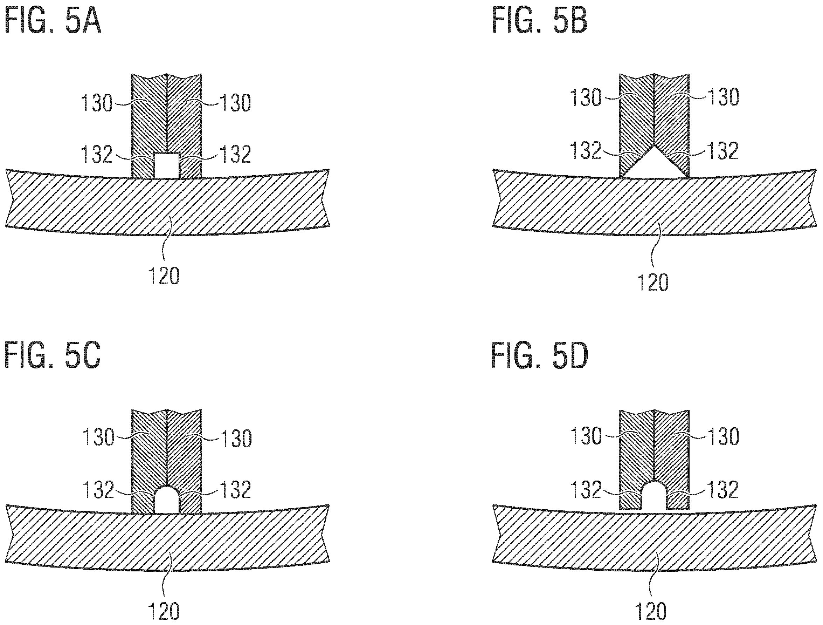

Die Fig. 5A-5D zeigen Beispiele für schematische Querschnitte von unterschiedlichen Implementierungen von benachbarten Längsflanschen 130 vor dem Trennen der Schale 120 (z.B. Alternativen zu dem in Fig. 4C gezeigten Beispiel).

Fig. 5A zeigt einen schematischen Querschnitt von benachbarten Längsflanschen 130 vor Trennen der Schale 120. Dabei weist der Teil 132 der Oberflächenkontur einen von der Kontaktfläche zwischen den Längsflanschen 130 zu der Anschlussfläche mit der Schale 120 sprunghaften Anstieg des Abstands zu der Kontaktebene auf. In anderen Worten, die Längsflansche 130 weisen eine im Querschnitt quadratische oder rechteckige Ausnehmung auf, sodass ein rechteckiger oder quadratischer Spalt zwischen den Längsflanschen bereits vor dem Trennen vorhanden ist.

Fig. 5B zeigt einen weiteren schematischen Querschnitt von benachbarten Längsflanschen 130 vor Trennen der Schale 120. Dabei weist der Teil 132 der Oberflächenkontur einen von der Kontaktfläche zwischen den Längsflanschen 130 zu der Anschlussfläche mit der Schale 120 linear ansteigenden Abstand zu der Kontaktebene auf. In anderen Worten, die Längsflansche 130 weisen eine im Querschnitt dreieckige, Keil-förmige oder Kerben-förmige Ausnehmung auf, sodass ein dreieckiger Spalt zwischen den Längsflanschen bereits vor dem Trennen vorhanden ist.

Fig. 5C zeigt einen weiteren schematischen Querschnitt von benachbarten Längsflanschen 130 vor Trennen der Schale 120. Dabei weist der Teil 132 der Oberflächenkontur einen von der Kontaktfläche zwischen den Längsflanschen 130 zu der Anschlussfläche mit der Schale 120 ansteigenden Abstand zu der Kontaktebene auf. Die Längsflansche 130 weisen eine im Querschnitt Viertelkreis-förmige oder Viertelellipsen-förmige Ausnehmung auf, sodass ein Halbkreis-förmiger oder Halbellipsen-förmiger Spalt zwischen den Längsflanschen bereits vor dem Trennen vorhanden ist.

Fig. 5D zeigt einen weiteren schematischen Querschnitt von benachbarten Längsflanschen 130 vor Trennen der Schale 120. Dabei weist der Teil 132 der Oberflächenkontur einen von der Kontaktfläche zwischen den Längsflanschen 130 zu der Anschlussfläche mit der Schale 120 zuerst ansteigenden und dann gleichbleibenden Abstand zu der Kontaktebene auf. Die Längsflansche 130 weisen eine im Querschnitt zu Beginn Viertelkreis-förmige oder Viertelellipsen-förmige Ausnehmung auf, sodass zu Beginn ein Halbkreis-förmiger oder Halbellipsen-förmiger Spalt zwischen den Längsflanschen bereits vor dem Trennen vorhanden ist, der sich darauf folgend im Wesentlichen parallel zur Kontaktebene zur Schale 120 erstreckt. Dadurch kann beispielsweise ein im Vergleich zu Fig. 5C tieferer Spalt erzeugt werden.

Der in den Fig. 5A-5D gezeigte Spalt ist beispielsweise auch am fertig montierten Turm wieder vorhanden, da die beiden benachbarten Längsflansche lediglich zum Transport getrennt werden und am Ort der Errichtung des Turms wieder miteinander verbunden werden.

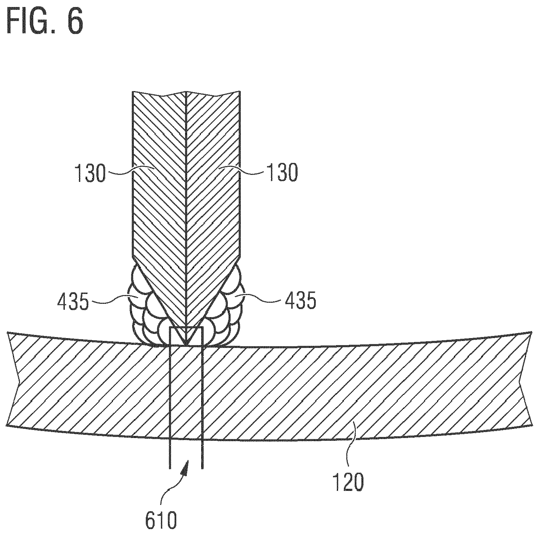

Fig. 6 zeigt einen schematischen Querschnitt von zwei benachbarten Längsflanschen 130 beim Trennen der Schale 120. In diesem Beispiel weisen die Längsflansche 130 vor dem Trennen der Schale 120 noch keinen Spalt im Bereich der Schale 120 auf. Der Spalt zwischen den Längsflanschen 130 wird erst durch das Trennen der Schale erzeugt. Die beiden Längsflansche 130 weisen jedoch eine deutlich größere (z.B. mehr als 1,5mal größere, mehr als zweimal größere oder mehr als 3mal größere) gemeinsame Dicke (Summe der Dicken der beiden Längsflansche) auf, als eine Dicke des Trennwerkzeugs 600 oder eine Dicke des durch das Trennen entstehenden Spalts. Die Längsflansche 130 sind beispielsweise durch Schweißnähte an der Schale 120 befestigt. Die Längsflansche können optional abgeschrägte Enden aufweisen, um eine stabilere Schweißverbindung mit der Schale 120 zu erreichen.

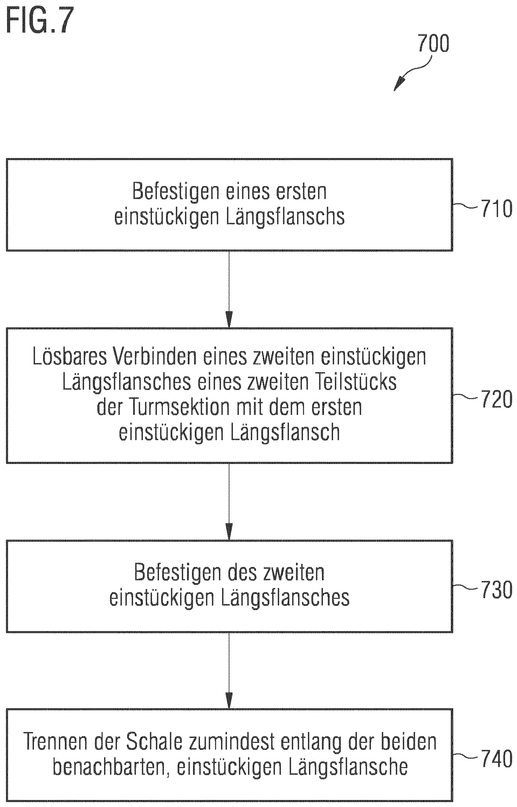

Fig. 7 zeigt ein Flussdiagramm eines Verfahrens zum Herstellen einer Turmsektion entsprechend einem Ausführungsbeispiel. Das Verfahren 700 umfasst ein (permanentes) Befestigen 710 eines ersten einstückigen Längsflansches für ein erstes Teilstück einer Turmsektion an einer Schale der Turmsektion und ein lösbares Verbinden 720 eines zweiten einstückigen Längsflansches für ein zweites Teilstück der Turmsektion mit dem ersten einstückigen Längsflansch für das erste Teilstück nach dem Befestigen des ersten einstückigen Längsflansches für das erste Teilstück an der Schale der Turmsektion, sodass die beiden benachbarten, einstückigen Längsflansche entlang einer Kontaktfläche direkt miteinander in Kontakt sind. Ferner umfasst das Verfahren 700 ein (permanentes) Befestigen des zweiten einstückigen Längsflansches für das zweite Teilstück der Turmsektion an der Schale der Turmsektion nach dem lösbaren Verbinden des zweiten einstückigen Längsflansches für das zweite Teilstück der Turmsektion mit dem ersten einstückigen Längsflansch für das erste Teilstück. Zusätzlich umfasst das Verfahren 700 ein Trennen der Schale zumindest entlang der beiden benachbarten, einstückigen Längsflansche, wobei zumindest nach dem Trennen an den beiden benachbarten, einstückigen Längsflanschen ein Spalt zwischen den der Schale zugewandten Enden der beiden benachbarten, einstückigen Längsflansche vorhanden ist.

Durch die Möglichkeit beim Trennen einen Spalt zu erzeugen oder durch die Existenz eines Spalts bereits vor dem Trennen kann die Trennung der Schale der Turmsektion deutlich vereinfacht werden. Ferner können durch das lösbare Verbinden nach dem Befestigen des ersten Längsflansches an der Schale und vor dem Befestigen des zweiten Längsflansches an der Schale die beiden Längsflansche besser und genauer in Anlage an die Schale gebracht werden, als wenn die Längsflansche schon vor dem Befestigen des ersten Längsflansches an der Schale miteinander verbunden werden.

Der Spalt zwischen den Enden der beiden benachbarten, einstückigen Längsflansche könnte nach dem Befestigen 730 des zweiten einstückigen Längsflansches und vor dem Trennen 740 an den der Schale zugewandten Enden der beiden benachbarten, einstückigen Längsflansche bereits vorhanden sein. Alternativ könnte die Schale so getrennt werden, dass der Spalt nach dem Trennen 740 an den der Schale zugewandten Enden der beiden benachbarten, einstückigen Längsflansche zwischen den Enden der beiden benachbarten, einstückigen Längsflansche vorhanden ist.

Beispielsweise könnte das Verfahren ferner ein Lösen der lösbaren Verbindung zwischen den beiden benachbarten, einstückigen Längsflanschen zum Transport an einen Bestimmungsort des Turms umfassen. Zum Herstellen eines Turms mit der Turmsektion kann das erste und das zweite Teilstück der Turmsektion nach dem Lösen der lösbaren Verbindung an einen Bestimmungsort oder Aufstellort des Turms transportiert werden. Am Bestimmungsort oder Aufstellort des Turms kann das erste Teilstück und das zweite Teilstück über den ersten einstückigen Längsflansch des ersten Teilstücks und den zweiten einstückigen Längsflansches des zweiten Teilstücks wiederum lösbar (e.g. durch Schrauben) miteinander verbunden werden.

Beispielsweise weist der einstückige Längsflansch für das erste Teilstück (und/oder der Längsflansch für das zweite Teilstück) vor dem Befestigen an der Schale einen Teil einer Oberflächenkontur auf, der sich von einer zu einer Verbindung mit dem Längsflansch des zweiten Teilstücks vorgesehenen Kontaktfläche des Längsflansches des ersten Teilstücks zu einer mit der Schale der Turmsektion verbundenen Anschlussfläche erstreckt. Der Teil der Oberflächenkontur weist beispielsweise einen Abstand zu einer durch die Kontaktfläche verlaufenden Kontaktebene auf.

Optional kann der einstückige Längsflansch für das erste Teilstück während des Befestigens an der Schale an einer dem zweiten Längsflansch abgewandten Seite und/oder an einer dem zweiten Längsflansch zugewandten Seite mit einer Schweißnaht an der Schale befestigt werden. Ferner kann der einstückige Längsflansch für das zweite Teilstück während des Befestigens an der Schale an einer dem ersten Längsflansch abgewandten Seite beispielsweise mit einer Schweißnaht an der Schale befestigt werden. Optional kann der einstückige Längsflansch des zweiten Teilstücks nach dem Trennen der Schale und nach einem Lösen der lösbaren Verbindung beispielsweise zusätzlich an einer dem ersten Längsflansch zugewandten Seite zusätzlich mit einer Schweißnaht an der Schale befestigt wird.

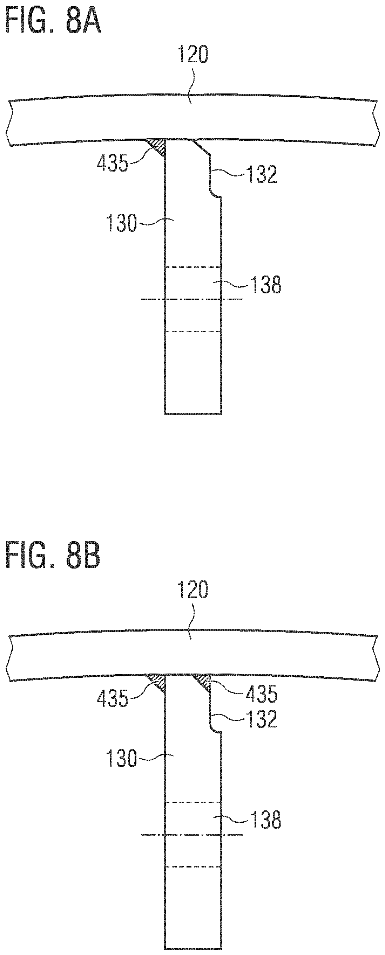

Weitere Details und Aspekte sind in Verbindung mit den vorangehend oder nachfolgend beschriebenen Ausführungsbeispielen erwähnt. Das in Fig. 7 dargestellte Ausführungsbeispiel kann ein oder mehrere zusätzliche optionale Merkmale umfassen, die einem oder mehreren Aspekten des vorgeschlagenen Konzepts oder einem oder mehreren der vorangehend (zum Beispiel Fig. 1-6) oder nachfolgend (zum Beispiel Fig. 8A-8I) beschriebenen Beispiele entsprechen.

Fig. 8A-8I zeigen schematische Querschnitte von Teilen einer Turmsektion in unterschiedlichen Stadien während der Herstellung der Turmsektion entsprechend einem Ausführungsbeispiel.

Fig. 8A zeigt eine schematische Teilansicht eines ersten einstückigen Längsflansches 130 nach dem Verbinden mit einer Schale 120 einer Turmsektion. Der erste Längsflansch 130 wird dazu an der dafür vorgesehene Stelle entlang der Schale 120 angeordnet und beispielsweise durch eine Schweißnaht 435 an einer dafür an einer der Kontaktfläche des Längsflansches (zur Anlage an einen zweiten Längsflansch) abgewandten Seite angeordneten Stelle an der Schale 120 befestigt (Längsflansch 1 einschweißen, Außenlage). Der erste Längsflansch ist in Fig. 8A an der Innenseite der Schale 120 angeordnet, kann aber alternativ auch an der Außenseite der Schale 120 angeordnet werden. Der erste Längsflansch weist Löcher 138 für eine Verbindung mit einem zweiten Längsflansch auf. Ferner weist der erste Längsflansch an einem der Schale 120 zugewandten Ende eine (Freistich-förmige oder kerbenförmige) Ausnehmung oder Verjüngung 132 auf. Optional kann eine weitere Schweißnaht 435 an einer der Kontaktfläche des Längsflansches zugewandten Seite angeordneten Stelle zwischen dem Längsflansch und der Schale 120 erzeugt werden, wie es in Fig. 8B gezeigt ist (Längsflansch 1 Gegenlage schweißen).

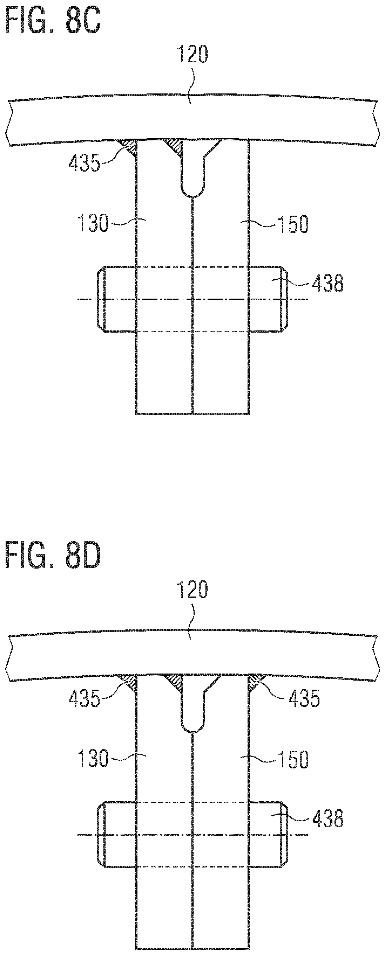

Danach wird ein zweiter einstückiger Längsflansch 150 eines zweiten Teilstücks der Turmsektion mit dem ersten einstückigen Längsflansch 130 des ersten Teilstücks nach dem Befestigen des ersten einstückigen Längsflansches 130 des ersten Teilstücks an der Schale 120 der Turmsektion lösbar verbunden, sodass die beiden benachbarten, einstückigen Längsflansche entlang der Kontaktfläche direkt miteinander in Kontakt sind, wie es in Fig. 8C gezeigt ist. Die lösbare Verbindung kann beispielsweise durch Schrauben 438 erfolgen, die sich durch die Löcher 138 in den Längsflanschen erstrecken (Längsflansch 1 und 2 verschrauben).

Nach dem lösbaren Verbinden des zweiten einstückigen Längsflansches 150 des zweiten Teilstücks der Turmsektion mit dem ersten einstückigen Längsflansch 150 des ersten Teilstücks kann der zweite einstückige Längsflansch 150 des zweiten Teilstücks der Turmsektion an der Schale 120 der Turmsektion befestigt werden (z.B. über eine Schweißnaht an einer dem ersten Längsflansch 130 abgewandten Seite des zweiten Längsflansches 150), wie es in Fig. 8D gezeigt ist (Längsflansch 2 Außenlage schweißen).

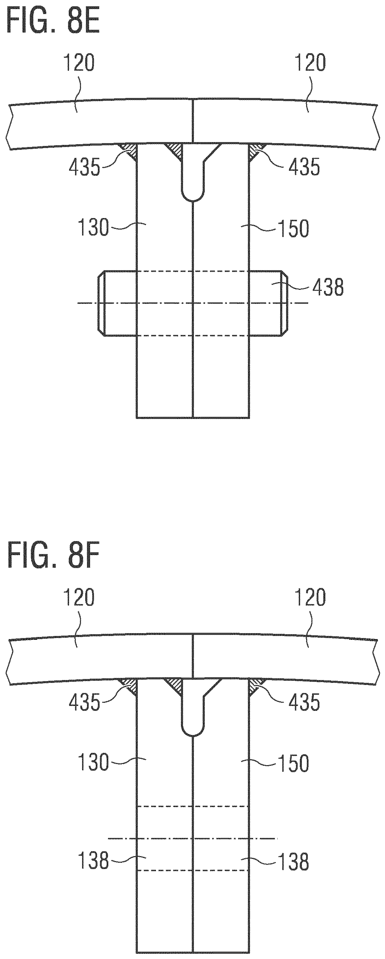

Nach dem Befestigen des zweiten Längsflansches 150 an der Schale 120 kann die Schale 120 zumindest entlang der beiden benachbarten, einstückigen Längsflansche in zumindest zwei Teilstücke getrennt werden (z.B. durch Sägen), wie es in Fig. 8E gezeigt ist. Da zwischen den beiden Längsflanschen an deren der Schale 120 zugewandten Ende bereits ein Spalt vorhanden ist, kann das Trennen beispielsweise sehr einfach und ohne Beschädigung der Längsflansche erfolgen. Auch nach dem Trennen an den beiden benachbarten, einstückigen Längsflanschen ist der Spalt zwischen den der Schale 120 zugewandten Enden der beiden benachbarten, einstückigen Längsflansche vorhanden.

Nach dem Trennen der Schale 120 in zumindest zwei Schalensegmente und der dadurch erfolgten Teilung der Turmsektion in zwei Teilstücke kann die lösbare Verbindung der zwei Längsflansche wieder gelöst werden, wie es in Fig. 8F gezeigt ist (Verschraubung lösen und Turmhälften separieren).

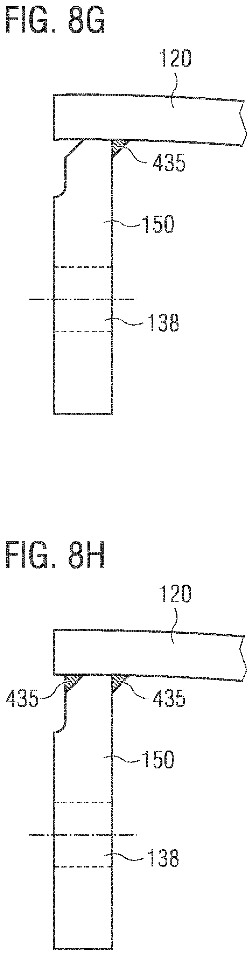

Die zumindest zwei Teilstücke können dann voneinander getrennt werden, wie es in Fig. 8G gezeigt ist, und getrennt zu dem Bestimmungsort oder Aufstellort des Turms transportiert werden. Zuvor kann optional noch nach dem Trennen der Schale auf einer der zuvor dem ersten Längsflansch 130 zugewandten Seite des zweiten Längsflansches 150 der zweite Längsflansch mit dem Schalensegment 120 des zweiten Teilstücks durch eine zusätzliche Schweißnaht 435 verbunden werden, wie es in Fig. 8H gezeigt ist (Längsflansch 2 Gegenlage schweißen).

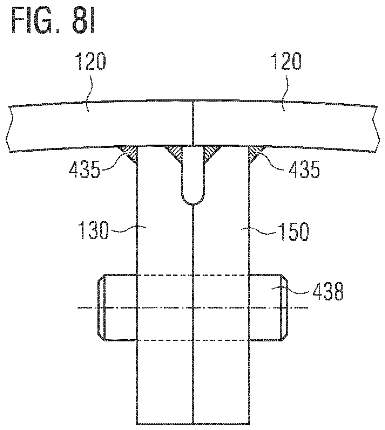

Nach dem Transport an den Bestimmungsort oder Aufstellort des Turms können die zumindest zwei oder mehr Teilstücke der Turmsektion wieder zu einer ganzen Turmsektion zusammengesetzt werden indem gegenüberliegende Längsflansche (z.B. erster und zweiter Längsflansch) wieder miteinander verbunden (z.B. durch Schrauben) werden, wie es in Fig. 8I gezeigt ist.

Einige Ausführungsbeispiele beziehen sich auf eine Turmsektion und Verfahren zur Herstellung einer Turmsektion.

Ein Turm für Windenergieanlagen kann beispielsweise besonders wirtschaftlich darstellbar sein, wenn möglichst wenige Segmente mit möglichst geringem Materialeinsatz zum Einsatz kommen. Dies kann bspw. in Bezug auf Windenergieanlagen mit großen Nabenhöhen erreicht werden, wenn bspw. nur das untere Turmsegment mit möglichst geringem Aufwand bspw. durch spanende Bearbeitung längs geteilt wird. Um die Standfestigkeit garantieren zu können, müssen die Teile einer solchen Turmsektion nach dem Transport wieder miteinander verbunden werden, bspw. durch Längsflansche.

Durch ein einfaches Trennen der Turmwand entsteht jedoch infolge von Materialabtrag ein Spalt. Diesen ohne weitere Maßnahmen zu schließen, könnte zu einem nicht kreisförmigen Querschnitt des Turms führen, was zu Problemen bei der Berechnung und dem Nachweis der Standfestigkeit führen kann.

Beispielsweise können aus Gründen des Nachweises der Standfestigkeit aber auch aus Fertigungsgründen, Längsflansche angeschweißt werden. Würden diese nach dem Trennen einer solchen Turmsektion angefügt, könnten sich durch Wärmeeintrag Verformungen der Turmstruktur ergeben. Werden die Flanschpaarungen bereits vor dem Trennen angebracht, könnten diese durch den Trennvorgang beschädigt werden. Würden die Flanschpaarungen durch ein Distanzstück auf Abstand gehalten werden, um einen Spalt zu generieren, könnte der Turm nachher nur mit diesem Distanzstück zusammengesetzt werden, was zusätzliche Kosten verursachen würde.

Entsprechend dem vorgeschlagenen Konzept kann mit einem Freistich im Bereich der Längsflanschpaarungen eine Verbesserung der Standfestigkeit, ein einfacherer Transport und/oder eine einfachere Montage und/oder Herstellung ermöglicht werden. Damit kann es möglich sein, den Turm so zu realisieren, dass das beim Herstellen abgetragene Material durch ein Dichtmittel oder Dichtelement aufgefüllt werden kann und die Längsflanschpaarungen in direktem Kontakt stehen, ohne dass diese beim Trennen der Turmschale beschädigt werden.

Beispielsweise kann basierend auf dem vorgeschlagenen Konzept eine Freistichförmige Ausnehmung oder ein Spalt verwendet werden, der z.B. als Schweißnahtvorbereitung für eine nach dem Trennen aufzubringende Schweißlage an der Verbindung Längsflansch - Turmschale innen dienen kann, als Orientierungshilfe beim Trennen dienen kann und/oder ein vollständiges Trennen ohne zusätzliche Bauteile (z.B. Abstandshalter) ermöglichen kann.

Der Spalt (Freistich-förmige Ausnehmung) kann beispielsweise auf zwei verschiedene Weisen erzeugt werden, entweder vor dem Trennen oderdurch das Trennen. Dieser kann dann verschiedene Formen annehmen, z.B. rund, rechteckig, dreieckig, mit zusätzlicher Phase oder sich aus der Form des Schneidwerkzeuges ergeben.

Hintergrund ist beispielsweise die Nacharbeit bezüglich Korrosionsschutz. Wird der Spalt vor dem Trennen erzeugt, kann so z.B. innen noch eine Schweißnaht aufgesetzt werden, ohne dass die Längsflansche auseinanderklaffen. Wird der Spalt durch das Trennen erzeugt, kann so ein vollständiges Trennen möglich sein, ohne über-mäßige Anforderungen an die Arbeitsgenauigkeit zu stellen. Da die Schweißnaht zwischen Längsflansch und Schale voll durchgeschweißt werden kann, sind z.B. keine zusätzlichen Nacharbeiten notwendig (z.B. außer die Versiegelung bei allen Varianten, um den Spalt in der Schale zu schützen).

Beispielsweise kann ein Längsflansch durch aufschweißen angebracht werden. Die innere Naht kann nachträglich angebracht werden. Ferner kann eine Teilung der Turmsektion durch auftrennen des konischen/zylindrischen Rohrs von außen durch Sägen, Fräsen, Lasern, Wasserstrahlschneiden, Brennschneiden oder Erodieren erfolgen. Dabei kann der Turm durch verschraubte Längsflansche zusammengehalten werden. Der durch das Trennen entstehende Spalt kann kleiner sein als der vorhandene Spalt an den Längsflanschen (durch Freistichförmige Geometrie der Flansche), um einen Freiraum für das Trennwerkzeug zu bilden. Beispielsweise kann der Spalt im Bereich um 5-20mm liegen. Ferner kann die geteilte Turmsektion abgedichtet werden. Beispielsweise kann ein Dichtmittel (z.B. formbarer Kunststoff, wie Silikon) im Bereich der Querflansche und/oder ein T-Profil aus Kunststoff oder ähnliches für die Abdichtung des Spalts des Längsflansches verwendet werden.

Einige Ausführungsbeispiele beziehen sich auf eine hohlzylindrische oder hohlkegelstumpfförmige Turmsektion, die mindestens zwei miteinander durch Längsflanschpaarungen verbundene großvolumige Komponenten aufweist, welche zusammen die Außenschale der Turmsektion bilden, die über mindestens einen Ringflansch und/oder mindestens ein Ringflanschsegment mit einem Fundament und/oder mit einer weiteren Turmsektion verbindbar sind. Die Außenschale kann dabei im Bereich der Längsflanschpaarungen mindestens einen Spalt aufweisen. Ferner können die Längsflanschpaarungen jeweils mindestens eine Freistich-förmige Ausnehmung aufweisen und die Längsflansche können durch Verbindungsmittel in direktem Kontakt miteinander verbunden sein.

Entsprechend einem Aspekt kann der mindestens eine Spalt in der Außenschale im Bereich der Längsflansche durch mindestens ein Dichtmittel aufgefüllt sein. Beispielsweise kann das Dichtmittel mindestens teilweise ein T-Profil aufweisen.

Entsprechend einem weiteren Aspekt kann die Verbindung der Längsflanschpaarung mindestens eine Schaubverbindung aufweisen.

Optional können die Längsflanschpaarungen zu dem mindestens einen Ringflansch und/oder mindestens einem Ringflanschsegment hin auslaufen. Optional kann die Turmsektion auch mehrere einstückige Längsflansche aufweisen, die in der Längsrichtung zueinander benachbart sind.

Die Turmsektion kann optional eine Türöffnung aufweisen.

Einige Ausführungsbeispiele beziehen sich auf ein Verfahren zum Herstellen einer hohlzylindrischen oder hohlkegelstumpfförmigen Turmsektion (z.B. nach einem der zuvor beschriebenen Beispiele). Das Verfahren umfasst beispielswiese ein Herstellen einer Turmschale in Form eines hohlzylindrischen oder hohlkegelstumpfförmigen Rohres mit mindestens einer angefügten Ringflanschkomponente und Fügen von mindestens zwei in direktem Kontakt miteinander verbundenen Längsflanschpaarungen, die eine Freistichförmige Ausnehmung oder einen Spalt aufweisen, mit dem hohlzylindrischen oder hohlkegelstumpfförmigen Rohr. Ferner kann das Verfahren ein Trennen der Turmschale in mindestens zwei Komponenten und ein Lösen der Längsflanschpaarungen umfassen. Die mindestens zwei Komponenten können am Ort der Errichtung des Turmes verbunden werden.

Optional kann das Herstellen einer Turmschale mindestens einen Walzvorgang umfassen und das Anfügen der mindestens einen Ringflanschkomponente mindestens einen Schweißvorgang umfassen.

Entsprechend einem Aspekt kann die mindestens eine Ringflanschkomponente vor dem Herstellen des hohlzylindrischen und hohlkegelstumpfförmigen Rohrs in mindestens zwei Teile getrennt werden.

Optional kann vor und/oder nach dem Herstellen einer Turmschale mindestens eine Längsflanschpaarung, die eine Freistich-förmige Ausnehmung oder einen Spalt aufweist, durch Schrauben, Nieten, Verklemmen oder Schweißen in direktem Kontakt miteinander verbunden werden.

Zusätzlich kann das Herstellen der Turmschale das mindestens teilweise Aufbringen eines Korrosionsschutzes umfassen.

Entsprechend einem Aspekt kann das Fügen der mindestens zwei in direktem Kontakt miteinander verbundenen Längsflanschpaarungen mit dem hohlzylindrischen oder hohlkegelstumpfförmigen Rohr ein Aufschweißen umfassen. Dabei kann das Aufschweißen der mindestens zwei in direktem Kontakt miteinander verbundenen Längsflanschpaarungen mit dem hohlzylindrischen oder hohlkegelstumpfförmigen Rohr eine Nahtvorbereitung umfassen.

Optional können vor dem Trennen der Turmschale Fixierungsmittel zur Sicherung der Form der Turmschale angebracht werden.

Entsprechend einem Aspekt kann das Trennen der Turmschale in mindestens zwei Komponenten durch Sägen, Fräsen, Lasern, Wasserstrahlschneiden, Brennschneiden und/oder Erodieren erfolgen.

Optional kann nach dem Lösen der Längsflanschpaarung ein weiterer Schweißvorgang und/oder eine Nahtnachbereitung erfolgen.

Zusätzlich kann das Fügen der mindestens zwei Komponenten am Ort der Errichtung des Turmes durch ein Verschrauben, Verschweißen, Verklemmen und/oder Vernieten entlang der Längsflansche erfolgen.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Beispiels in ihren verschiedenen Ausgestaltungen von Bedeutung sein und implementiert werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Prozess oder als ein Merkmal eines Prozesses zu verstehen ist. Analog dazu stellen Aspekte, die im Zusammenhang mit einem oder als ein Prozess beschrieben wurden, auch eine Beschreibung eines entsprechenden Blocks oder Details oder Merkmale einer entsprechenden Vorrichtung dar.

Ein Beispiel kann so als Programm mit einem Programmcode zum Durchführen eines Verfahrens gemäß einem Beispiel umgesetzt sein, wenn das Programm auf einer programmierbaren Hardwarekomponente abläuft. Die einzelnen Prozesse können hierbei durch Ansteuerungen entsprechender Aktuatoren, einem Auslesen von Speicherstellen oder anderen Datenquellen, numerischen und anderen Manipulationen von Daten sowie anderen Prozessen erzielt werden. Im Rahmen eines solchen Programms, jedoch auch im Rahmen anderer Umsetzungen eines Verfahrens gemäß einem Beispiel, können so die einzelnen Prozesse beispielsweise ein Erzeugen, Bereitstellen und gegebenenfalls Empfangen von Steuersignalen, Sensorsignalen und anderen Signalen umfassen. Das Senden kann ebenfalls ein Schreiben oder Abspeichern eines Wertes in eine Speicherstelle oder ein Register umfassen. Entsprechend kann ein Auslesen oder Empfangen auch ein entsprechendes Auslesen eines Registers oder einer Speicherstelle umfassen. Diese Signale können beispielsweise als elektrische, optische oder funktechnische Signale übertragen werden und hinsichtlich ihrer Signalwerte und ihrer zeitlichen Ausgestaltung voneinander unabhängig kontinuierlich oder diskret ausgestaltet sein. Die entsprechenden Signale können so beispielsweise analoge Signale, jedoch auch digitale Signale umfassen.

Die oben beschriebenen Beispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Beispiele hierin präsentiert wurden, beschränkt sei.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Beispiels in ihren verschiedenen Ausgestaltungen von Bedeutung sein und implementiert werden.

### Bezugszeichenliste

- 100: Teilstück einer Turmsektion
- 102: Teilstück einer Turmsektion
- 106: Kontaktebene
- 120: Schale, Schalensegment
- 130: Längsflansch
- 132: Teil einer Oberflächenkontur des Längsflansches
- 134: Anschlussfläche
- 136: Kontaktfläche
- 138: Loch
- 150: Längsflansch
- 160: Dichtelement
- 200: Windenergieanlage
- 210: Turmsektion
- 220: Turmsektion
- 230: Maschinenhaus
- 240: Rotor
- 300: Verfahren zum Herstellen mindestens eines Teilstücks
- 310: Befestigen von zwei benachbarten Längsflanschen
- 320: Trennen der Schale
- 402: Spalt zwischen Längsflansche
- 404: Spalt zwischen Schalensegmenten
- 432: der Kontaktfläche des Längsflansches zugewandt angeordnete Stelle
- 433: Schweißnaht
- 434: der Kontaktfläche des Längsflansches abgewandt angeordnete Stelle
- 435: Schweißnaht
- 438: Schraube
- 460: Querflansch
- 462: Loch
- 610: Trennwerkzeug
- 700: Verfahren zum Herstellen einer Turmsektion
- 710: Befestigen eines ersten einstückigen Längsflansches
- 720: Lösbares Verbinden eines zweiten einstückigen Längsflansches eines zweiten Teilstücks der Turmsektion mit dem ersten einstückigen Längsflansch
- 730: Befestigen des zweiten einstückigen Längsflansches
- 740: Trennen der Schale

## Patentansprüche

1. Teilstück einer zweiteiligen Turmsektion eines Turms, wobei das Teilstück umfasst:
ein Stahlschalensegment (120) des Teilstücks, wobei das Stahlschalensegment (120) eine Halbschale der zweiteiligen Turmsektion bildet, wobei das Stahlschalensegment (120) eine Dicke von mehr als 35 mm aufweist; und
zumindest einen an einer Längsseite des Stahlschalensegments (120) befestigten Längsflansch (130) zum Verbinden mit einem Längsflansch des zweiten Teilstücks der zweiteiligen Turmsektion, das die zweite Halbschale der zweiteiligen Turmsektion bildet.

2. Teilstück nach Anspruch 1, wobei das Stahlschalensegment (120) eine Dicke von mehr als 50 mm aufweist.

3. Teilstück nach einem der vorhergehenden Ansprüche, wobei das Stahlschalensegment (120) des Teilstücks eine Form aufweist, die im Wesentlichen einen Teil einer zylindermantel-förmigen oder kegelstumpfmantel-förmigen Geometrie bildet.

4. Teilstück nach einem der vorhergehenden Ansprüche, wobei eine Querseite des Stahlschalensegments (120) eine Länge von mehr als 4 m aufweist.

5. Teilstück nach einem der vorhergehenden Ansprüche, wobei die Längsseite des Stahlschalensegments (120) eine Länge von mehr als 5 m aufweist.

6. Teilstück nach einem der vorhergehenden Ansprüche, ferner umfassend einen an einer Querseite des Stahlschalensegments (120) des Teilstücks befestigten Querflansch zum Verbinden des Teilstücks mit einer anderen Turmsektion, einem Teilstück einer anderen Turmsektion oder einem Fundament.

7. Teilstück nach einem der vorhergehenden Ansprüche, ferner umfassend eine Türöffnung.

8. Turm mit einer zweiteiligen Turmsektion, wobei die zweiteilige Turmsektion ein Teilstück gemäß einem der vorhergehenden Ansprüche umfasst.

9. Windenergieanlage (200) mit einem Turm nach Anspruch 8.

10. Verfahren (300) zum Herstellen eines Teilstücks einer zweiteiligen Turmsektion, wobei das Verfahren umfasst:
Bereitstellen eines Stahlschalensegments (120) des Teilstücks, wobei das Stahlschalensegment (120) eine Halbschale der zweiteiligen Turmsektion bildet, wobei das Stahlschalensegment (120) eine Dicke von mehr als 35 mm aufweist; und
Befestigen zumindest eines Längsflanschs (130) an einer Längsseite des Stahlschalensegments (120) zum Verbinden mit einem Längsflansch des zweiten Teilstücks der zweiteiligen Turmsektion, die die zweite Halbschale der zweiteiligen Turmsektion bildet.

11. Verfahren nach Anspruch 10, wobei das Stahlschalensegment (120) eine Dicke von mehr als 50 mm aufweist.
